# FASCICULE DE BREVET EUROPEEN

(11) **EP 1 922 231 B1**
(45) Date de publication et mention de la délivrance du brevet: **31.12.2008**
(21) Numéro de dépôt: 06808292.4
(22) Date de dépôt: 07.09.2006
(51) Int. Cl.: B60R 19/18

(54) **PEAU DE PARE-CHOCS**
STOSSTANGENVERKLEIDUNG
BUMPER SKIN

(30) Priorité: 07.09.2005 FR 0509133
(43) Date de publication de la demande: 21.05.2008
(73) Titulaire: Compagnie Plastic Omnium, 69007 Lyon (FR)
(72) Inventeur: DEMANGE, Jean Yves, F-01500 Amberieu En Bugey (FR); MONTANVERT, Pierre, F-69100 Villeurbanne (FR)
(74) Mandataire: Remy, Vincent Noel Paul
(86) Numéro de dépôt international: PCT/FR2006/050854
(87) Numéro de publication internationale: WO 2007/028931

(56) Documents cités:
- DE-A1- 4 330 397
- FR-A- 2 840 573
- US-A1- 2002 113 446

## Description

La présente invention concerne une peau de pare-chocs en matière plastique.

On connaît les peaux de pare-chocs munies d'orifices de réception d'optiques, tels que des feux anti-brouillard, entre leurs parties frontales et leurs crosses.

De telles peaux sont souvent réalisées par injection, technique de fabrication aujourd'hui bien maîtrisée et procurant des pièces de formes et dimensions bien contrôlées. Une telle peau de pare-chocs est decrite dans le document DE4330397A

Les orifices ménagés dans ces pièces peuvent être directement issus de moulage ou obtenus par poinçonnage, à l'occasion d'une opération de reprise. Mais même dans ce cas, à quelques rares exceptions près, l'orifice se trouve à l'intérieur d'un aménagement de forme, qui crée une irrégularité de forme sur la face visible de la peau.

Ainsi, du fait de l'orifice lui-même ou de l'aménagement qui le contient, une irrégularité de forme apparaît sur la face visible de la peau de pare-chocs, entre sa partie frontale et chacune de ses crosses latérales.

Pour des pièces peintes, de telles irrégularités ne soulèvent aucune difficulté.

En revanche, pour des pièces teintées dans la masse, on constate que la matière plastique, freinée dans sa progression à l'intérieur de l'empreinte du moule par les contours de l'irrégularité, se divise en au moins deux fronts de matière qui se séparent en franchissant l'irrégularité. Ces fronts de matière se rejoignent en aval de l'irrégularité, dans les crosses, où les fronts se ressoudent selon une ligne de soudure, aussi appelée ligne de recollement de flux, qui laisse des traces visibles sur les crosses.

Il en résulte que l'on ne peut pas, sauf à prendre mille précautions complexes et onéreuses, obtenir une peau de pare-chocs ayant une irrégularité de forme entre sa partie frontale et ses crosses, par une technique simple d'injection de matière plastique non peinte a posteriori.

La présente invention vise à proposer une nouvelle peau de pare-chocs qui ne présente pas cet inconvénient.

La présente invention a pour objet une peau de pare-chocs en matière plastique, comprenant une partie frontale et au moins une crosse latérale, ladite peau présentant une irrégularité de forme sur sa face visible entre la partie frontale et la crosse, caractérisée, en ce que la partie frontale et la crosse sont constituées par deux pièces distinctes, dont l'une au moins est délimitée par l'irrégularité de forme.

Ainsi, la peau de pare-chocs selon l'invention ne présente aucune ligne de soudure sur la face visible de ses crosses, du fait que l'irrégularité de forme ne constitue plus un frein à la progression d'un front non divisé de matière plastique dans celle au moins des deux pièces qui est délimitée par ladite irrégularité.

Dans un mode de réalisation particulier de l'invention, seule la crosse est délimitée par l'irrégularité de forme.

Selon ce mode de réalisation, la partie frontale peut se prolonger au-delà de l'irrégularité de forme par une armature formant support pour la crosse. Cette armature peut alors présenter des lignes de soudure résultant du franchissement de l'irrégularité de forme par la matière injectée, mais ces lignes de soudure ne sont pas visibles sur la peau car elles sont recouvertes par la crosse appliquée sur l'armature, dans le prolongement de la partie centrale.

Au-delà de ses avantages premiers, l'invention présente les avantages supplémentaires suivants :
- ses parties constitutives étant moins volumineuses, elles peuvent être obtenues moyennant un outil industriel moins coûteux;
- une plus grande diversité de formes et de motifs et/ou coloris peuvent être combinés pour former des peaux de pare-chocs diverses, adaptées par exemple à différentes versions d'un même véhicule.

La présente invention peut en outre présenter l'une ou plusieurs des caractéristiques suivantes :
- l'irrégularité de forme est un aménagement d'optique ;
- l'irrégularité de forme comprend un trou traversant la peau ;
- la partie frontale est réalisée par injection de matière plastique. En effet, il est conforme à l'invention que seule la partie frontale soit obtenue par injection de matière plastique, la crosse pouvant résulter de tout procédé de fabrication ;
- la matière plastique injectée est teintée dans la masse ;
- la matière plastique contient des particules décoratives.

Afin de mieux faire comprendre l'invention, on va maintenant en décrire un exemple de réalisation non limitatif de la portée de l'invention, en référence aux dessins annexés dans lesquels :
- la figure 1 est une vue en perspective d'une peau de pare-chocs selon un mode de réalisation de l'invention ;
- la figure 2 est une vue éclatée de la figure 1.

La peau de pare-chocs du dessin comprend :
- une partie frontale 1 ;
- deux crosses latérales 3 ;
- entre la partie frontale 1 et chaque crosse latérale 3, une ligne de style 5;
- s'étendant d'une crosse à l'autre et traversant longitudinalement la partie centrale, une ouverture d'entrée d'air 7 qui constitue une irrégularité de forme.

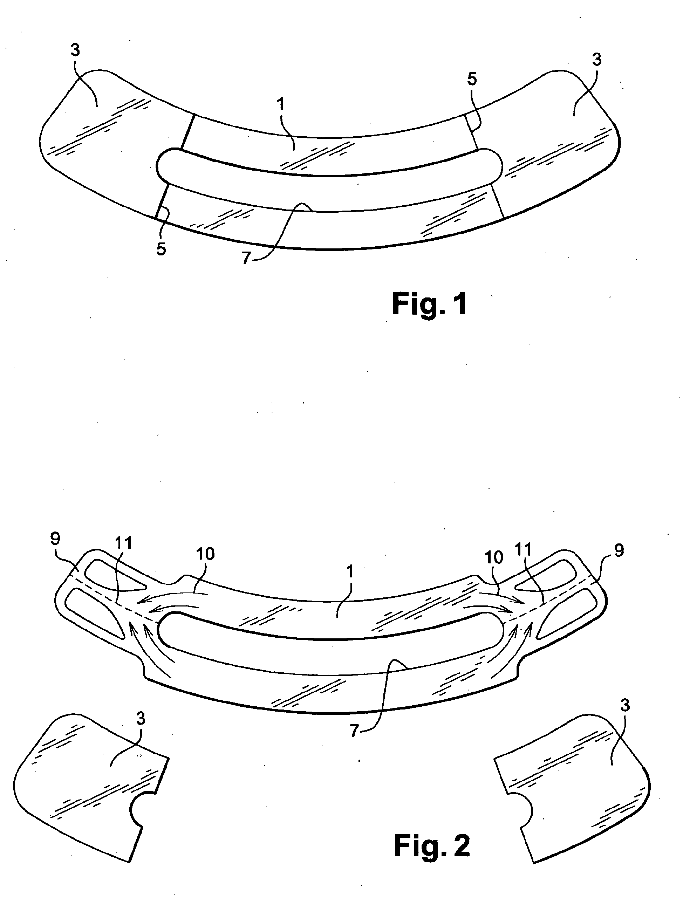

Sur la vue éclatée de la figure 2, on voit que les deux crosses latérales 3 et la partie frontale 1 sont trois pièces distinctes.

La partie frontale 1 se prolonge latéralement, au-delà de l'ouverture 7, par une armature 9 à l'emplacement de chacune des deux crosses latérales. Cette partie frontale est obtenue par injection de matière plastique dans une empreinte à l'intérieur de laquelle la matière plastique fendue se propage depuis le milieu en direction des deux armatures 9.

Les flux de matière sont représentés par des flèches 10 sur la figure 2.

Ainsi, en direction d'une armature, deux fronts de matière progressent dans l'empreinte du moule, de part et d'autre de l'ouverture 7, pour se rejoindre dans l'armature 9.

Il se forme donc une ligne de soudure 11 dans chaque armature à l'endroit où les flux 10 se rejoignent.

Chaque crosse est obtenue séparément, par un procédé qui peut également être l'injection de matière plastique, puis rapportée sur l'armature correspondante.

La ligne de style 5 facilite la juxtaposition de la zone visible de la partie frontale 1 et des deux crosses latérales 3. '

Il est bien entendu que le mode de réalisation qui vient d'être décrit ne présente aucun caractère limitatif et qu'il pourra recevoir toute modification désirable sans sortir pour cela du cadre de l'invention.

## Revendications

1. Peau de pare-chocs en matière plastique, comprenant une partie frontale (1) et au moins une crosse latérale (3), ladite peau présentant une irrégularité de forme (7) sur sa face visible entre la partie frontale et la crosse, **caractérisée en ce que** la partie frontale (1) et la crosse (3) sont constituées par deux pièces distinctes, dont l'une au moins est délimitée par l'irrégularité de forme (7).

2. Peau de pare-chocs selon la revendication 1, dans laquelle seule la crosse (3) est délimitée par l'irrégularité de forme (7).

3. Peau de pare-chocs selon la revendication 2, dans laquelle la partie frontale (1) se prolonge au-delà de l'irrégularité de forme (7) par une armature (9) formant support pour la crosse (3).

4. Peau de pare-chocs selon l'une quelconque des revendications 1 à 3, dans laquelle l'irrégularité de forme (7) est un aménagement d'optique.

5. Peau de pare-chocs selon la revendication 4, dans laquelle l'irrégularité de forme (7) comprend un trou traversant la peau.

6. Peau de pare-chocs selon l'une quelconque des revendications 1 à 5, dans laquelle la partie frontale (1) est réalisée par injection de matière plastique.

7. Peau de pare-chocs selon la revendication 6, dans laquelle la matière plastique injectée est teintée dans la masse.

8. Peau de pare-chocs selon la revendication 7, dans laquelle la matière plastique contient des particules décoratives.

## Claims

1. A bumper skin made of plastics material, the skin comprising a front portion (1) and at least one side overrider (3), said skin presenting a shape irregularity (7) in its face that is visible between the front portion and the overrider, the skin being **characterized in that** the front portion (1) and the overrider (3) are constituted by two distinct parts, at least one of which is bounded by the shape irregularity (7).

2. A bumper skin according to claim 1, in which only the overrider (3) is bounded by the shape irregularity (7).

3. A bumper skin according to claim 2, in which the front portion (1) extends beyond the shape irregularity (7) in the form of reinforcement (9) forming a support for the overrider (3).

4. A bumper skin according to any one of claims 1 to 3, in which the shape irregularity (7) is an arrangement for a light unit.

5. A bumper skin according to claim 4, in which the shape irregularity (7) comprises a hole passing through the skin.

6. A bumper skin according to any one of claims 1 to 5, in which the front portion (1) is made by injection molding a plastics material.

7. A bumper skin according to claim 6, in which the injected plastics material is mass colored.

8. A bumper skin according to claim 7, in which the plastics material contains decorative particles.

## Patentansprüche

1. Haut eines Stoßfängers aus Kunststoff, umfassend einen vorderen Teil (1) und wenigstens einen Seitenschenkel (3), wobei die Haut eine Formunregelmäßigkeit (7) an der sichtbaren Seite zwischen dem vorderen Teil und dem Schenkel aufweist, **dadurch gekennzeichnet, dass** der vordere Teil (1) und der Schenkel (3) aus zwei unterschiedlichen Teilen bestehen, von denen eines durch die Formunregelmäßigkeit (7) begrenzt ist.

2. Haut eines Stoßfängers nach Anspruch 1, wobei nur der Schenkel (3) von der Formunregelmäßigkeit (7) begrenzt ist.

3. Haut eines Stoßfängers nach Anspruch 2, wobei der vordere Teil (1) über die Formunregelmäßigkeit (1) durch eine Verkleidung (9) hinausragt, die eine Stütze für den Schenkel (3) bildet.

4. Haut eines Stoßfängers nach einem der Ansprüche 1 bis 3, wobei die Formunregelmäßigkeit (7) eine Optikvorrichtung ist.

5. Haut eines Stoßfängers nach Anspruch 4, wobei die Formunregelmäßigkeit (7) ein Loch durch die Haut umfasst.

6. Haut eines Stoßfängers nach einem der Ansprüche 1 bis 5, wobei der vordere Teil (1) durch Spritzen aus Kunststoff erzeugt wird.

7. Haut eines Stoßfängers nach Anspruch 6, wobei der gespritzte Kunststoff in der Masse gefärbt ist.

8. Haut eines Stoßfängers nach Anspruch 7, wobei der Kunststoff dekorative Partikel enthält.
